# EUROPEAN PATENT APPLICATION

(11) **EP 4 513 284 A1**
(43) Date of publication of application: **26.02.2025**
(21) Application number: 23192583.5
(22) Date of filing: 22.08.2023
(51) Int. Cl.: G05B 19/4093, B26D 5/00

(54) **METHOD FOR CHANGING A CUTTING DIE**

(71) Applicant: Bobst Firenze S.r.l., 50013 Campi Bisenzio (FI) (IT)
(72) Inventor: RUHM, Benjamin, 1807 Blonay (CH); MAGNONE, Stefano, 15057 Tortona (IT)
(74) Representative: Hasler, David

(57) **Abstract**

A method for changing a cutting die (28) of a digital and/or flexographic printing machine (10) comprising a die cutting unit (16) is shown. The die cutting unit (16) comprises a rotary cutting cylinder (26) on which a cutting die (28) can be mounted, a mounting station (44), a dismounting station (46), and a magazine (64) adapted for storing a plurality of cutting dies (28). Further, the die cutting unit (16) is connected to a control unit (20). The method comprises at least the following steps:
a) Converting a print job into planes, wherein at least one plane comprises information about the required cutting die (28);
b) Determining the required cutting die (28) and the location corresponding to the required cutting die (28); and
c) Providing and/or displaying all available data concerning the required cutting die (28).

## Description

The invention relates to a method for changing a cutting die of a digital and/or flexographic printing machine comprising a die-cutting unit.

Especially when printing labels or similar commodities on a self-adhesive material, printing machines often include a die-cutting unit. Most commonly, a cutting die is placed on a rotating cylinder and the material is fed through a gap between the cylinder and a counter-pressure cylinder such that the web containing the print is pressed against the cutting die.

However, the number of prints required for a job is usually small and since the size and shape of the printed product varies from job to job, the cutting die needs to be changed between each job. Currently, an operator is required to start the removal process of the cutting die from the rotary cylinder and remove the cutting die to place it into a storage unit. Similarly, the operator needs to manually insert the new cutting die into the die-cutting unit.

Therefore, it is an objective of the invention to provide an automated process for producing labels, and in particular for changing a cutting die.

The objective is solved by a method for changing a cutting die of a digital and/or flexographic printing machine comprising a die-cutting unit. The die-cutting unit comprises a rotary cutting cylinder on which a cutting die can be mounted, a mounting station, a dismounting station, and a magazine adapted for storing a plurality of cutting dies. Further, the die-cutting unit is connected to a control unit. The method comprises at least the following steps:
a) Converting a print job into planes, wherein at least one plane comprises information about the required cutting die;
b) Determining the required cutting die; and
c) Providing and/or displaying all available data concerning the required cutting die.

In other words, the control unit is capable of automatically selecting the required cutting die based on the information provided about the print job and load the cutting die in the die-cutting unit. In particular, the plane may comprise information regarding the shape of the label to be cut by the die-cutting unit. The print job is converted into planes by the control unit and the acquired information may be displayed via a user interface.

The information about the cutting die may comprise whether the cutting die is in stock, the location of the cutting die in the magazine of the die-cutter, or the location in alternative storage space, the number of sheets already processed by the cutting die, the number of times it was already loaded and unloaded in the die-cutter, where the cutting die was ordered, or if an order for the cutting die is pending, its identification number, the shape of the cut, etc.

According to an embodiment, the control unit may access a database, which stores information regarding at least the available cutting die, upcoming print jobs, the number of jobs performed by each cutting die and the current location of each cutting die. This allows the control unit to make a pre-selection of the cutting dies required throughout the day and plan the order of the print jobs accordingly. Furthermore, by having information about the number of jobs performed by each cutting die, it is possible to avoid using a cutting die, which has already performed a large number of jobs and has dull edges that may decrease the quality.

Preferably, the control unit determines the required cutting die based on an identification number or based on the shape required for the print job. In particular, each cutting die has been assigned a unique identification number such that the control unit as well as an operator may differentiate between the different cutting dies. The identification number may be attached to a cutting die in the form of a QR-code or the like.

According to an embodiment, the control unit determines whether the required cutting die is currently available. This is done, for example, by comparing the required shape for the upcoming print job with the shapes of the cutting die stored in the database. That way, if the required shape is available, the location of the corresponding cutting die may be acquired as well. By location we refer to the location of the cutting die in the loading magazine of the die-cutter.

In the case, when the control unit determines that the required cutting die is in the magazine of the die cutting unit, the cutting die is automatically loaded onto the rotary cutting cylinder via the mounting station. In other words, if the required cutting die is stored in the magazine at the time when a new print job is started, the process of changing the cutting die is completely automated and controlled by the control unit. Accordingly, an operator does not need to be present in order to remove the cutting die from the prior print job and insert the new cutting die. Instead, the control unit provides all necessarily instructions for the change to happen automatically.

In the case that the control unit determines that the required cutting die is in a storage unit, the control unit generates an alert initiating a collection of the required cutting die from the storage unit and loading the cutting die into the magazine. Preferably, the storage unit is within the production side such that the required cutting die can easily be collected. The required cutting die may be collected by an operator who then places the required cutting die in the magazine or, alternatively, the control unit may instruct a transportation system that automatically collects the required cutting die.

Preferably, the control unit stores and updates information regarding the current cutting dies placed in the magazine and their respective locations.

Based on that information, the control unit may provide the location in the magazine for the operator to load the required cutting die.

Accordingly, the control unit may choose the location in the magazine for a new cutting die based on upcoming print jobs and/or based on the last use of each of the cutting die. By having access to information about the location of the cutting dies currently placed in the magazine, the control unit is able to provide the exact location in the magazine of the new required cutting die. For example, if a cutting die is not required for any of the upcoming print jobs it may be discarded from the magazine and replaced by the required cutting die. Alternatively, if no information about upcoming print jobs is available, the control unit may choose to discard the cutting die that was used the least recently. Furthermore, the control unit may also choose to discard the cutting die which has been used the most since this cutting die may have dull edges due to the quantity of print jobs.

The cutting die can be loaded and unloaded in any sequence. This means that you have the flexibility to load any cutting die from the magazine without being constrained by the position of the previously used die in the die-cutter.

When the required shape for the job is new or the cutting die having the required shape has reached the maximum number of recommended jobs, the control unit may place an order for a cutting die having the required shape. Once the new cutting die is finished, the control unit will allocate an identification number to the new cutting die. That way, it can be guaranteed that the required cutting die, which is currently unavailable, is being produced and available as soon as possible.

Preferably, if the production of the required cutting die is possible on-site, the control unit instructs the corresponding machine and/or an operator to start the production of the required cutting die. Alternatively, the control unit may send an order to an external supplier who may then proceed with producing the required cutting die.

Furthermore, if the required cutting die is new and/or not available, the control unit changes the order of the upcoming print jobs such that the print job requiring the new cutting die is moved towards the end of the line of upcoming print jobs. Alternatively, the control unit may suspend the print job requiring the new cutting die until it is available. That way, it is ensured that there are no gaps in the overall production process and no money is lost by having an extended pause between print jobs.

According to an embodiment, the control unit stores the number of times each cutting die is used and generates a message for the operator when a maximum number of jobs for a certain cutting die has been reached. Once a cutting die has been used for a certain amount of print jobs its edges start getting dull, which leads to a decrease in the quality of the product. By alerting the operator, it can be ensured that no cutting die with dull edges is being used.

Additionally, the control unit may generate an alert and/or automatically place an order for a replacement of the cutting die, when a certain preset threshold about the number of jobs for a certain cutting die has been reached. That way a replacement can be ordered in advance, such that a certain cutting die not being available due to frequent use can be avoided.

Preferably, the control unit is also connected to the digital and/or flexographic printing machine, such that the control unit also controls the change of printing plates. For the printing planes, each plane contains information regarding a color or varnish. Therefore, it is possible to completely automate the printing process starting from the printing process with the digital and/or flexographic printing machine up to the labels being cut in the die-cutting unit.

According to an embodiment, the magazine is displaced between a plurality of loading positions and a plurality of unloading positions via a displacement system.

In particular, the control unit may move the magazine into the loading and/or unloading position required for loading the required cutting die and/or for unloading the previous cutting die via the displacement system. Therefore, the whole process of changing the cutting die may be automated and controlled by the control unit. This speeds up the process and reduces costs since the operator is not required to stand next to the die-cutting unit in order to constantly monitor and change the cutting dies.

The control unit may be either an external computer or a dedicated processing unit. Furthermore, the control unit may be a central control unit used not only for the entire digital and/or flexographic printing machine but for multiple machines, in particular including a machine for producing cutting dies.

Therefore, the present invention is based on the idea that the control unit is able to determine and select the required cutting die, possibly load the cutting die into the magazine or order its production, and displace the magazine such that the required cutting die can be transferred directly from the magazine into the die cutting unit and/or from the die cutting unit directly back into the magazine. That way, the process of changing the cutting die becomes completely automated since an operator no longer has to fetch the correct cutting die and place it into the machine or alternatively remove the cutting die by hand and select the right storage position. Instead, the control unit moves the magazine into the loading or unloading position such that the correct cutting die can be transferred in a fully automated manner. Furthermore, should an operator be required to exchange a required cutting die with one already placed in the magazine, the control unit provides all necessary information regarding the positions of the cutting dies.

Further features and advantages of the invention will become apparent from the following description and from the accompanying drawings to which reference is made. In the schematic drawings,
- Figure 1 shows a digital and/or flexographic printing machine comprising a die cutting unit;
- Figure 2 shows a die cutting unit according to the subject invention;

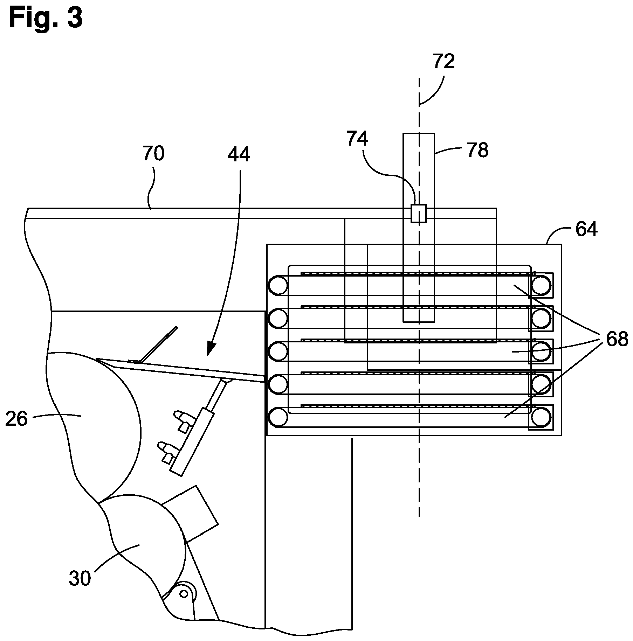

- Figure 3 shows a magazine used in the die cutting unit of figure 1;

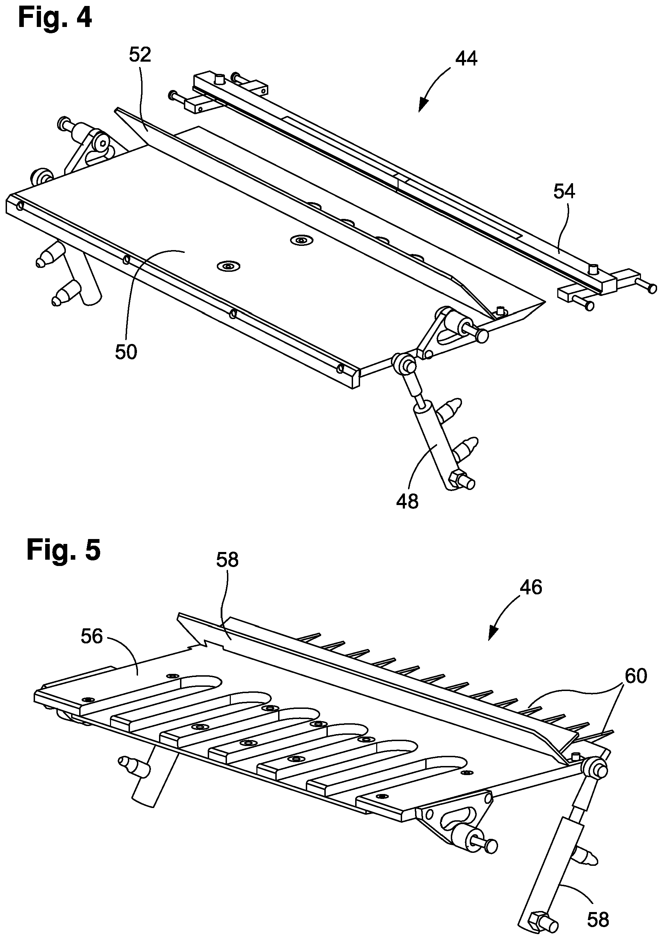

- Figure 4 shows a mounting station of the die cutting unit;
- Figure 5 shows a dismounting station of the die cutting unit; and
- Figure 6 shows a method for changing a cutting die.

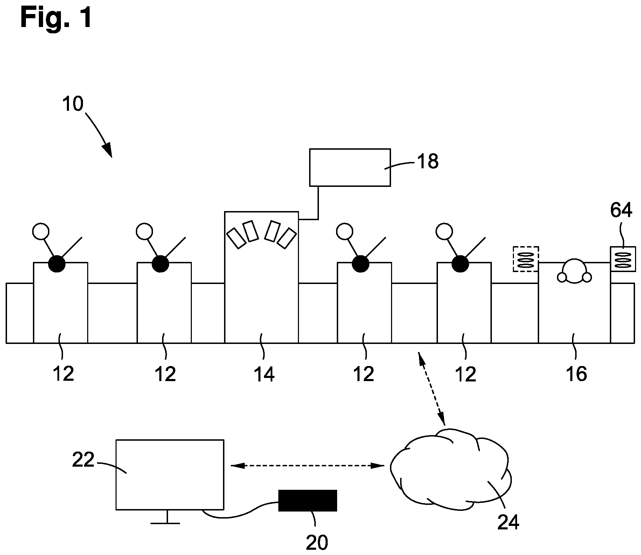

Figure 1 shows a schematic drawing of a hybrid flexographic and digital printing machine 10. In the embodiment shown here, the hybrid digital and flexographic printing machine 10 comprises multiple flexographic printing units 12, a digital printing unit 14 as well as a die cutting unit 16.

Alternatively, the printing machine 10 may simply be a digital printing machine or a flexographic printing machine.

The hybrid digital and flexographic printing machine 10 is connected to a user interface 18 as well as a control unit 20. In the embodiment shown in Figure 1, the control unit 20 is provided by an external computer 22 that is connected to the hybrid digital and flexographic printing machine 10 via a cloud 24. Note that the external computer 22 may also be directly connected to the hybrid digital and flexographic printing machine 10 either via a wireless connection or through cables.

Instead of an external computer 22, the control unit 20 may also be provided in the form of a dedicated processing unit, preferably integrated into the hybrid digital and flexographic printing machine 10.

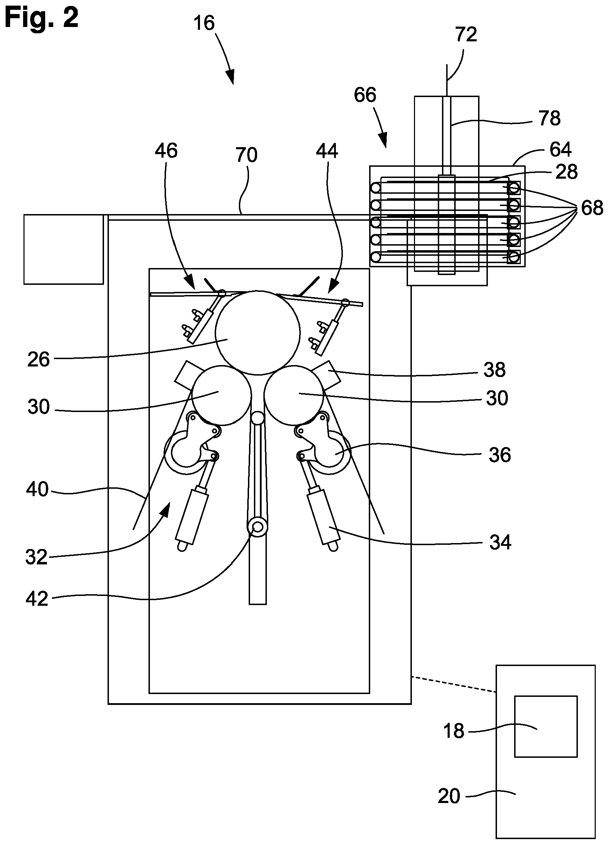

The die cutting unit 16 shown in Figure 2 comprises a rotary cutting cylinder 26 on which a cutting die 28 can be mounted. Since the cutting dies 28 are usually made from steel, the rotary cutting cylinder 26 is preferably magnetic such that the cutting dies 28 can be easily attached and removed from the rotary cutting cylinder 26. The cutting die 28 mounted onto the rotary cylinder 26 covers at least a part of the peripheral surface of the rotary cutting cylinder 26.

Since the size and shape of the cutting dies 28 vary depending on the print job, the cutting dies 28 may each have an identification marking, e.g. a QR-code, such that they can be easily differentiated.

Next to the rotary cutting cylinder 26 is at least one counter-pressure cylinder 30. In the embodiment shown in Figure 2, the die cutting unit 16 comprises two counter-pressure cylinders 30.

The counter-pressure cylinders 30 are positioned on either side and below the rotary cutting cylinder 26 and are pushed against the rotary cutting cylinder 26 by a clamping system 32.

In particular, the clamping system 32 may consist of an eccentric actuator 34, preferably a pneumatic actuator. The eccentric actuator 34 adjusts the clamping force by changing the rotation angle of an eccentric mechanism 36.

The die cutting unit 16 also comprises clamping rollers 38 designed to push a web 40 comprising the printed labels to be cut against the counter-pressure cylinders 30, which guide the web 40 between them and the rotary cutting cylinder 26.

Furthermore, the die cutting unit 16 comprises a compensation roller 42, which is used to adjust the path length of the web 40 depending on the size of the cutting die 28.

Additionally, the die cutting unit 16 also comprises a mounting station 44 and a dismounting station 46. The mounting station 44 and the dismounting station 46 are preferably located on opposite sides of the rotary cutting cylinder 26 and can be moved towards and away from the rotary cutting cylinder 26 via their respective pneumatic actuators 48.

The mounting station 44 consists of a mounting plate 50 onto which a mounting ramp 52 is attached, e.g. with screws. At the edge of the mounting plate 50 in front of the mounting ramp 52 a guide rail 54 is positioned. The guide rail 54 ensures that the cutting die 28 is positioned correctly and can easily be attached to the rotary cutting cylinder 26.

The dismounting station 46 located on the opposite side of the rotary cutting cylinder 26 comprises a dismounting plate 56 and a dismounting ramp 58. At the edge of the dismounting plate 56 facing the rotary cutting cylinder 26 multiple teeth 60 are positioned.

The teeth 60 are positioned such that they can engage in corresponding grooves 62 in the rotary cutting cylinder 26. This way, the teeth 60 can easily slide below a cutting die 28 placed on the rotary cutting cylinder 26 in order to peel the cutting die 28 off.

Additionally, the die cutting unit 16 also comprises a magazine 64 and a displacement system 66.

The magazine 64 is adapted for storing a plurality of cutting die 28. The magazine 64 comprises multiple storage spaces 68. The magazine 64 shown in Figure 2 has five distinct storage spaces 68, which consist of a belt drive each. In particular, each belt drive has a conveyor belt driven by a motor with an encoder.

The displacement system 66 comprises a first guide 70 as well as a second guide 72. The first guide 70 is preferably provided by guide rails, which extend horizontally and parallel to the storage spaces 68. The second guide 72 is positioned perpendicular to the first guide 70 such that it allows for a vertical displacement of the magazine 64.

The magazine 64 is attached to the first guide 70 via a slider 74, wherein the slider 74 can be displaced along the first guide 70 and hence provides a horizontal movement of the magazine 64 and the second guide 72. Preferably, the slider 74 can be displaced along the first guide 70 via a linear pneumatic cylinder. However, the transfer system 76 may be provided by any number of drives that provide a displacement of the slider 74 along the first guide 70.

The second guide 72 positioned between the slider 74 and the magazine 64 comprises a piston/cylinder drive 78, which is responsible for displacing the magazine 64 along the vertical second guide 72.

In order to provide a completely automated printing and cutting process, the die cutting unit 16 also comprises a user interface 18. Since the die cutting unit 16 is part of a digital and flexographic printing machine 10, the user interface 18 may be combined with a user interface for the printing unit in order to provide a user interface 18 for the entire digital and flexographic printing machine 10. In that case, the user interface 18 is preferably located upstream of the printing unit. Furthermore, the user interface 18 is preferably provided by a digital front end.

The user interface 18 is connected to the control unit 20, which executes the instructions provided via the user interface 18. At the beginning of a day an operator will input the printing jobs to be done that day and enter the required specifications via the user interface 18.

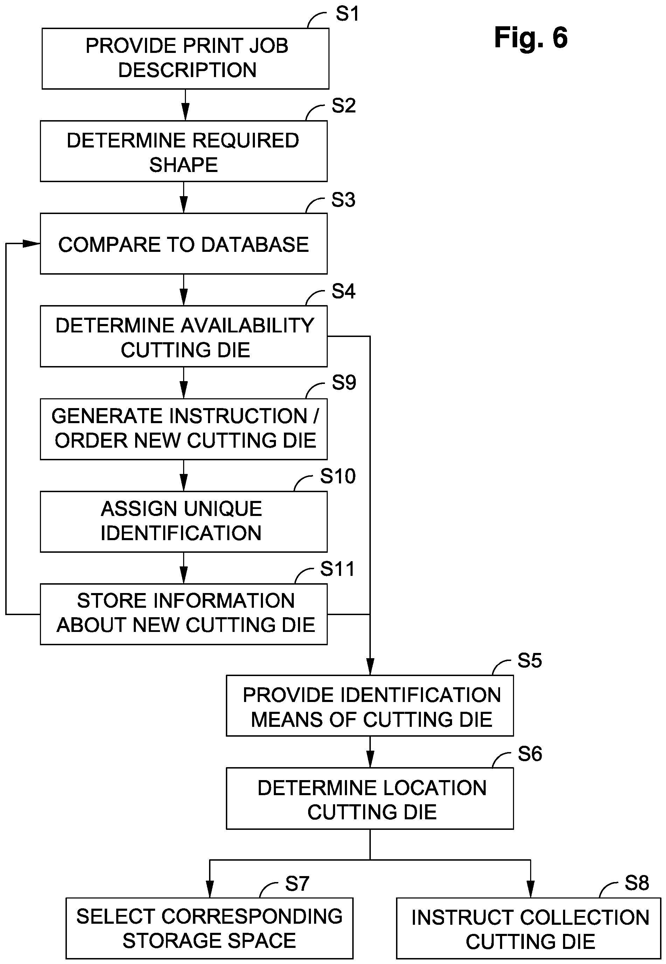

The control unit 20 converts the instructions provided, preferably in the form of a PDF, as shown in step S1 in Figure 6, into planes. At least one plane comprises information about the required cutting die 28, including the desired cutting shape as indicated in step S2.

As shown in step S3, the control unit 20 compares the acquired information with the information stored in the database, for example in the cloud 24, in order to determine if the required cutting die 28 is currently available. If the required cutting die 28 exists (see step S4), the control unit 20 determines its identification number (see step S5).

In the next step S6, the control unit 20 determines whether the required cutting die 28 is currently located in the magazine 64. If it is the case, the control unit 20 will select the corresponding storage space 68, according to step S7.

Furthermore, the control unit 20 then positions the magazine 64 on the side of the die cutting unit 16 where the mounting station 44 is located. When the control unit 20 has determined the required cutting die 28 based on the identification marking on the cutting die 28, the control unit 20 starts the vertical displacement along the second guide 72 by activating the piston drive 78.

The piston drive 78 is aligned with the mounting station 44 and the control unit 20 turns on the belt drive of the storage space 68 containing the required cutting die 28. Then, the cutting die 28 is attached to the rotary cutting cylinder 26 via the mounting station 44.

In particular, the cutting die 28 is fed through the guide rail 54 on the mounting plate 50 such that it is aligned properly. Then it is pushed from the mounting plate 50 onto the rotary cutting cylinder 26 via the mounting ramp 52.

Once the cutting die 28 is correctly placed on the rotary cutting cylinder 26, the web 40 starts to traverse the die cutting unit 16.

Since the counter-pressure cylinder 30 rotates at a constant speed corresponding to the line speed of the entire hybrid digital and flexographic printing machine 10, the speed of the rotary cutting cylinder 26 is adjusted based on the size of the cutting die 28.

If the cutting die 28 corresponds to half of the size of the peripheral circumference of the rotary cutting cylinder 26, the rotary cutting cylinder 26 rotates at the same speed as the counter-pressure cylinder 30. However, if the cutting die 28 covers less than half of the peripheral circumference of the rotary cutting cylinder 26, the rotary cutting cylinder 26 needs to rotate at a higher speed than the counter-pressure cylinder 30. Contrarily, if the cutting die 28 covers more than half of the peripheral circumference of the rotary cutting cylinder 26, the speed of the rotary cutting cylinder 26 needs to be smaller than the speed of the counter-pressure cylinders 30.

Furthermore, the compensation roller 42 adjusts the path length according to the cutting die 28 currently positioned on the rotary cutting cylinder 26. That means that the compensation roller 42 is moved before each cutting job in order to optimize the path length of the web 40, which in turn optimizes the cutting result.

Once a cutting job is finished, the dismounting station 46 is moved towards the rotary cutting cylinder 26 via its pneumatic actuators 48. In particular, the dismounting station 46 is moved towards the rotary cutting cylinder 26 until its teeth 60 engage with the corresponding grooves 62 on the rotary cutting cylinder 26.

Once the rotary cutting cylinder 26 has rotated enough that the cutting die 28 slides over the teeth 60 of the dismounting station 46, the cutting die 28 is peeled off the rotary cutting cylinder 26 and slides over the dismounting ramp 58.

The cutting die 28 is transferred from the dismounting station 46 onto its storage space 68 on the magazine 64, which now is positioned on the side opposite to the mounting station 44.

That means, the magazine 64, the second guide 72 and the slider 74 have been moved along the first guide 70 to the opposite side of the rotary cutting cylinder 26 while the piston drive 78 has moved the magazine 64 in the vertical direction such that the correct storage space 68 aligns with the dismounting ramp 58 of the dismounting station 46.

Then the process is repeated with the cutting die 28 required for the next print job.

When the control unit 20 determines that the required cutting die 28 is in a storage unit 80, the control unit 20 generates an alert initiating a collection of the required cutting die 28 from the storage unit 80 and loading the cutting die 28 into the magazine 64. This corresponds to step S8 in Figure 6.

In particular, the cutting die 28 may be collected by an automatic transport system such that the whole process of selecting and loading the appropriate cutting die 28 remains fully automated. Alternatively, the control unit 20 may provide an operator with the location of the cutting die 28 such that the operator can collect and load the appropriate cutting die 28.

In addition, since the die control unit 20 stores and updates information regarding the cutting dies 28 currently placed in the magazine 64 and their respective locations, the control unit 20 also provides the operator with the information into which storage space 68 the cutting die 28 needs to be loaded.

The control unit 20 chooses the storage space 68 in the magazine 64 for the new cutting die 28 based on upcoming print jobs. If one of the currently loaded cutting dies 28 is not needed for any of the print jobs presently cued up, that cutting die 28 may be discarded such that there is space to load the selected cutting die 28. Alternatively, if no information about upcoming print jobs is available, the control unit 20 may decide which storage space 68 to load the required cutting die 28 into based on the last use of each of the cutting dies 28 currently stored in the magazine 64. In particular, the cutting die 28 used the least recently will be discarded in favor of the required cutting die 28. Furthermore, the control unit 20 may also decide to discard the cutting die 28 from the magazine 64 that has been used the most. That way, it can be avoided that a cutting die 28 having dull edges is used, which would decrease the quality.

Since the control unit 20 stores the number of times each cutting die 28 is used, the control unit 20 can generate a message for the operator when a maximum number of jobs for a certain cutting die 28 has been reached. That way, a replacement can be ordered in time such that the cutting die 28 is available for the next time that shape is required. In particular, the control unit 20 may generate said alert and/or generate an order once the number of jobs exceeds a predetermined threshold value for a certain cutting die 28. That way, the cutting die 28 can be ordered/produced in advance of it reaching the maximum number of jobs.

Once the required cutting die 28 is placed in the magazine 64, the control unit 20 proceeds with loading the cutting die 28 onto the rotary cutting cylinder 26 as before.

In the case that the control unit 20 determines that the required shape of cutting die 28 does not exist in step S4, either because it is a new shape or because the shape has already reached the maximum amount of recommended jobs, the control unit 20 places an order for a new cutting die 28 having the required shape as shown in step S9.

In particular, the control unit 20 may instruct an operator to produce the new required cutting die 28 or, alternatively, directly instruct the corresponding machine to produce the required cutting die 28 directly. Should producing a cutting die 28 not be possible at the production site, the control unit 20 can send an order containing instructions to produce the required cutting plate to an external supplier.

Once the new cutting die 28 has been produced and has arrived on site, the control unit 20 assigns the new cutting die 28 its own unique identification number as shown in step S10. Additionally, as is indicated in step S11, the control unit 20 adds all necessary information about the new cutting die 28 to the database.

Afterwards, the new cutting die 28 is loaded into the magazine 64 such that it can be mounted onto the rotary cutting cylinder 26.

In order to keep the operator informed, the control unit 20 provides and/or displays all available data concerning the required cutting die 28. Preferably, the control unit 20 displaces all information via the user interface 18.

In order to avoid any pauses between print jobs, the control unit 20 may change the order of the cued printing jobs if a required shape is not readily available. In other words, if the required shape is not available, the control unit 20 may move the print job towards the end of the cued up and upcoming print jobs. Alternatively, especially if the new cutting die 28 has to be ordered from an external supplier, the print job may be suspended until the new cutting die 28 has arrived.

In the embodiment shown in Figure 1, the control unit 20, i.e. the external computer 22, is also connected to the hybrid digital and flexographic printing machine 10 such that the control unit 20 also controls the change of printing plates. In that case, the flexographic printing units 12 preferably have the ability to load a set of printing plates for the next printing job while the printer is running with its current job.

## Claims

1. A method for changing a cutting die (28) of a digital and/or flexographic printing machine (10) comprising a die cutting unit (16), wherein the die cutting unit (16) comprises a rotary cutting cylinder (26) on which a cutting die (28) can be mounted, a mounting station (44), a dismounting station (46), and a magazine (64) adapted for storing a plurality of cutting dies (28), wherein the die cutting unit (16) is connected to a control unit (20), and wherein the method comprises at least the following steps:
a) Converting a print job into planes, wherein at least one plane comprises information about the required cutting die (28);
b) Determining the required cutting die (28); and
c) Providing and/or displaying all available data concerning the required cutting die (28).

2. The method according to claim 1, wherein the control unit (20) accesses a database, which stores information regarding at least the available cutting die (28), upcoming print jobs, the number of jobs performed by each cutting die (28) and the current location of each cutting die (28).

3. The method according to any one of claims 1 or 2, wherein the control unit (20) determines the required cutting die (28) based on an identification number or based on a shape required for the print job.

4. The method according to any one of the preceding claims, wherein the control unit (20) determines whether the required cutting die (28) is currently available.

5. The method according to any one of the preceding claims, wherein when the control unit (20) determines that the required cutting die (28) is in the magazine (64) of the die cutting unit (16) the cutting die (28) is automatically loaded onto the rotary cutting cylinder (26) via the mounting station (44).

6. The method according to any one of claims 1 to 4, wherein when the control unit (20) determines that the required cutting die (28) is in a storage unit (80) the control unit (20) generates an alert initiating a collection of the required cutting die (28) from the storage unit (80) and loading the cutting die (28) into the magazine (64).

7. The method according to any one of the preceding claims, wherein the control unit (20) stores and updates information regarding the current cutting dies (28) placed in the magazine (64) and their respective locations.

8. The method according to any one of the preceding claims, wherein the control unit (20) provides the location in the magazine (64) for the operator to load the required cutting die (28).

9. The method according to any one of the preceding claims, wherein the control unit (20) chooses the location in the magazine (64) for a new cutting die (28) based on upcoming print jobs and/or based on the last use of each of the cutting die (28).

10. The method according to any one of claims 1 to 4, wherein when the required shape for the job is new or the cutting die (28) having the required shape has reached the maximum amount of recommended jobs the control unit (20) places an order for a cutting die (28) having the required shape, and wherein when the new cutting die (28) is finished the control unit (20) allocates an identification number to the new cutting die (28).

11. The method according to claim 9, wherein the control unit (20) changes the order of the upcoming print jobs such that the print job requiring the new cutting die (28) is moved towards the end of the upcoming print jobs, or wherein the print job is suspended until the new cutting die (28) is available.

12. The method according to any one of the preceding claims, wherein the control unit (20) stores the number of times each cutting die (28) is used, and wherein the control unit (20) generates a message for the operator when a maximum number of jobs for a certain cutting die (28) has been reached.

13. The method according to any one of the preceding claims, wherein the control unit (20) is also connected to the digital and/or flexographic printing machine (10) such that the control unit (20) also controls the change of printing plates.

14. The method according to any one of the preceding claims, wherein the magazine (64) is displaced between a plurality of loading positions and a plurality of unloading positions via a displacement system (66).

15. The method according to any one of the preceding claims, wherein the control unit (20) moves the magazine (64) into the loading and/or unloading position required for loading of the required cutting die (28) and/or for unloading the previous cutting die (28).

16. The method according to any one of the preceding claims, wherein the control unit (20) is one of an external computer (22) or a dedicated processing unit.
